# EUROPÄISCHE PATENTSCHRIFT

(11) **EP 2 806 111 B1**
(45) Veröffentlichungstag und Bekanntmachung des Hinweises auf die Patenterteilung: **30.03.2016**
(21) Anmeldenummer: 13168659.4
(22) Anmeldetag: 22.05.2013
(51) Int. Cl.: F01D 11/14, F01D 5/22, F01D 17/02, G01B 7/14, F01D 21/00

(54) **Turbomaschinenstufe und Verfahren zum Ermitteln eines Dichtungsspalts und/oder einer Axialposition einer solchen Turbomaschinenstufe**
Turbo engine stage and method for determining a seal gap and/or an axial position of such a turbo engine stage
Etage de turbomachine et procédé de détermination d'un jeu d'étanchéité et/ou d'une position axiale d'un tel étage de turbomachine

(43) Veröffentlichungstag der Anmeldung: 26.11.2014
(73) Patentinhaber: MTU Aero Engines AG, 80995 München (DE)
(72) Erfinder: Gerbl, Florian, 82140 Olching (DE); Gründmayer, Jürgen, 82319 Starnberg (DE); Stadlbauer, Martin, 80992 München (DE); Trassl, Ernst, 80992 München (DE); Schneider, René, 85521 Ottobrunn (DE); Zielinski, Michael, 85716 Unterschleissheim (DE); Zeisberger, Andreas, 80995 München (DE)

(56) Entgegenhaltungen:
- WO-A2-2008/031394
- GB-A- 2 204 693
- US-A1- 2009 003 991

## Beschreibung

Die vorliegende Erfindung betrifft eine Turbomaschinenstufe, insbesondere Turbinen- oder Verdichterstufe einer Gasturbine, mit einem, insbesondere konischen, Gehäuse, in dem eine Laufschaufelanordnung mit mehreren Laufschaufeln angeordnet ist, die ein Außendeckband mit wenigstens einem radialen Dichtungsflansch aufweisen, sowie ein Verfahren zum Ermitteln eines Dichtungsspalts und/oder einer Axialposition der Laufschaufelanordnung einer solchen Turbomaschinenstufe.

Durch einen oder mehrere in axialer Richtung hintereinander angeordnete radiale Dichtungsflansche kann der Dichtungsspalt zwischen Gehäuse und Außendeckband reduziert werden. Dabei kann es, insbesondere infolge unterschiedlicher Betriebsbedingungen, zu einem Anstreifen zwischen Dichtungsflansch und Gehäuse, und in der Folge zu einem Abrieb am Dichtungsflansch und/oder einem Einrieb im Gehäuse kommen, so dass sich der Dichtungsspalt verändert. Die Kenntnis des aktuellen Dichtungsspalts kann vorteilhaft sein, insbesondere, um den Betrieb der Turbomaschine hieran anzupassen und/oder Wartungen auszuführen oder zu planen. Zusätzlich oder alternativ kann auch die Kenntnis der aktuellen Axialposition der Laufschaufelanordnung vorteilhaft sein, insbesondere, um den Betrieb der Turbomaschine hieran anzupassen.

Eine Aufgabe einer Ausführung der vorliegenden Erfindung ist es, die Wartung und/oder den Betrieb einer Turbomaschinenstufe zu verbessern.

US20090003991 wird als nächstliegender Stand der Technik gegenüber dem Gegenstand des Anspruchs angesehen.

Diese Aufgabe wird durch eine Turbomaschinenstufe mit den Merkmalen des Anspruchs 1 gelöst. Anspruch 8 stellt ein Verfahren zum Ermitteln eines Dichtungsspalts und/oder einer Axialposition der Laufschaufelanordnung einer solchen Turbomaschinenstufe unter Schutz, vorteilhafte Ausführungsformen der Erfindung sind Gegenstand der Unteransprüche.

Eine Turbomaschinenstufe nach einem Aspekt der vorliegenden Erfindung kann insbesondere eine Turbinen- oder Verdichterstufe einer Gasturbine sein, vorzugsweise eines Flugtriebwerks.

Sie weist eine Laufschaufelanordnung mit mehreren in Umfangsrichtung benachbarten Laufschaufeln auf, die mit einem Rotor der Turbomaschine lösbar oder fest, insbesondere integral, ausgebildet sein können. Die Laufschaufelanordnung ist in einem Gehäuse angeordnet, welches in einer Ausführung - wenigstens im Bereich der Laufschaufelanordnung - in Durchströmungsrichtung konvergieren oder divergieren kann, was vorliegend zur kompakteren Darstellung allgemein als konisches Gehäuse bezeichnet wird. Gleichermaßen kann das Gehäuse - wenigstens im Bereich der Laufschaufelanordnung - in Durchströmungsrichtung einen wenigstens im Wesentlichen konstanten Querschnitt aufweisen, was vorliegend entsprechend als zylindrisches Gehäuse bezeichnet wird.

Die Laufschaufelanordnung weist ein Außendeckband auf, das durch mehrere Außendeckbandabschnitte gebildet sein kann, mit denen jeweils eine oder mehrere Laufschaufeln verbunden sein können. Das Außendeckband kann in einer Ausführung in Durchströmungsrichtung konvergieren oder divergieren oder einen, wenigstens im Wesentlichen konstanten, Außenumfang aufweisen, was vorliegend entsprechend als konisches bzw. zylindrisches Außendeckband bezeichnet wird.

Radial außen auf dem Außendeckband sind ein oder mehrere, in axialer bzw. Durchströmungsrichtung voneinander beabstandete radiale Dichtungsflansche angeordnet, die sich vorzugsweise stegartig radial nach außen sowie in Umfangsrichtung erstrecken. Solche radiale Dichtungsflansche werden nachfolgend auch kurz als Dichtfinne(n) bezeichnet.

Nach einem Aspekt der vorliegenden Erfindung weist der einzige Dichtungsflansch, bei mehreren in axialer Richtung voneinander beabstandeten Dichtungsflanschen einer oder mehrere, insbesondere alle Dichtungsflansch jeweils eine Vertiefungsanordnung mit einer oder mehreren radialen Vertiefungen auf. Mehrere radiale Vertiefungen können äquidistant oder asymmetrisch über den Umfang verteilt sein. In einer Ausführung weist die Vertiefungsanordnung genau zwei, drei oder vier Vertiefungen auf. Eine Vertiefung kann in einer Ausführung zwei gegenüberliegende Flanken aufweisen, die sich in einer Weiterbildung, wenigstens im Wesentlichen, in radialer Richtung erstrecken und/oder in einen benachbarten, vorzugsweise zylinderringförmigen, Außenumfang des Dichtungsflansches übergehen, vorzugsweise in einer Rundung. Zwischen den Flanken erstreckt sich in einer Weiterbildung ein Vertiefungsgrund, der in einer Ausführung, wenigstens im Wesentlichen, eine zylinderringförmige Umfangsfläche aufweisen kann. Mithin kann eine Vertiefung in einer Ausführung insbesondere U-förmig ausgebildet sein.

In der Vertiefung ist ein radialer Vorsprung angeordnet. Er kann sich insbesondere von dem Vertiefungsgrund aus radial nach außen erstrecken und in einer Weiterbildung eine wenigstens im Wesentlichen zylinderringförmige Umfangsfläche aufweisen. Der radiale Vorsprung kann, in Umfangsrichtung gesehen, insbesondere mittig in der Vertiefung angeordnet sein, gleichermaßen aber auch außermittig. In einer Ausführung ist die Vertiefung mit dem darin angeordneten Vorsprung symmetrisch ausgebildet, was bei gegensinnigen Drehungen vorteilhaft gleichartige Signale erzeugen kann. Gleichermaßen kann die Vertiefung mit dem darin angeordneten Vorsprung auch symmetrisch ausgebildet sein, um bei gegensinnigen Drehungen vorteilhaft unterschiedliche Signale zu erzeugen.

An dem Gehäuse ist eine Sensoranordnung mit einem oder mehreren kapazitiven Sensoren bzw. Sonden zur Erfassung eines radialen Abstandes zu einer Umfangsfläche des Dichtungsflansches angeordnet. Mehrere Sensoren können äquidistant oder asymmetrisch über den Umfang verteilt sein. In einer Ausführung weist die Vertiefungsanordnung genau zwei, vier oder sechs Sensoren auf. Unter einem kapazitiven Sensor zur Erfassung eines radialen Abstandes zu einer Umfangsfläche des Dichtungsflansches wird vorliegend insbesondere ein Mittel verstanden, das ein Signal liefert, welches von einem radialen Abstand des Sensors zur Umfangsfläche, vorzugsweise nichtlinear, abhängt. Als Umfangsfläche wird vorliegend insbesondere eine Fläche eines Dichtungsflansches, einer Vertiefung bzw. eines Vorsprungs bezeichnet, die sich in Umfangs- und axialer Richtung erstreckt, mit anderen Worten die Oberseite des Dichtungsflansches, der Vertiefung bzw. des Vorsprungs von radial außen betrachtet.

Beim Überlaufen eines Sensors durch eine Vertiefung ändert sich der radiale Abstand: zunächst vergrößert er sich, sobald der Sensor den Vertiefungsgrund erfasst. Anschließend verringert sich der radiale Abstand, wenn der Sensor den Vorsprung erfasst. Anschließend vergrößert er sich wieder, sobald der Sensor den Vertiefungsgrund auf der in Umfangsrichtung gegenüberliegenden Seite des Vorsprungs erfasst. Schließlich verringert sich der radiale Abstand wieder auf den Ausgangswert, wenn der Sensor die Umfangsfläche des Dichtungsflansches neben der Vertiefung erfasst. Somit ergibt sich in einer Ausführung beim Vorbeidrehen einer Vertiefung an einem Sensor ein allgemein W-artiger Signalverlauf mit vier abwechselnden, gegensinnigen Signalhüben. Als Signalhub wird vorliegend insbesondere eine, insbesondere im Wesentlichen absatz- bzw. flankenförmige, Erhöhung oder Verringerung des Signals bzw. Signalwertes des Sensors bezeichnet.

Nach einem Aspekt der vorliegenden Erfindung wird wenigstens ein Signalhub der Sensoranordnung infolge einer Erfassung wenigstens einer Vertiefung der Vertiefungsanordnung durch wenigstens einen Sensor der Sensoranordnung erfasst. Die nachfolgend anhand einer Vertiefung und eines bzw. zweier Sensoren erläuterte Erfassung bzw. Auswertung kann in gleicher Weise für mehrere Vertiefungen und/oder Sensoren durchgeführt werden, wobei dann in einer Ausführung die Erfassungsergebnisse miteinander abgeglichen, insbesondere gemittelt werden können.

Ein erfindungsgemäßer Signalhub kann sich, insbesondere in Rotationsrichtung gesehen, bei einem Übergang von einer Umfangsfläche des Dichtungsflansches neben einer Vertiefung der Vertiefungsanordnung zu dieser Vertiefung oder (gegensinnig hierzu) von einer Vertiefung der Vertiefungsanordnung zu einer Umfangsfläche des Dichtungsflansches neben dieser Vertiefung ergeben. Beides wird gleichermaßen als Signalhub infolge einer Erfassung einer Vertiefung durch einen Sensor im Sinne der vorliegenden Erfindung bezeichnet. Gleichermaßen kann sich ein erfindungsgemäßer Signalhub auch bei einem Übergang von einem Vertiefungsgrund einer Vertiefung der Vertiefungsanordnung zu dem Vorsprung in dieser Vertiefung oder (gegensinnig hierzu) von einem Vorsprung einer Vertiefung der Vertiefungsanordnung zu einem Vertiefungsgrund dieser Vertiefung neben diesem Vorsprung ergeben. Auch dies wird als Signalhub infolge einer Erfassung einer Vertiefung durch einen Sensor im Sinne der vorliegenden Erfindung bezeichnet. Zusätzlich kann ein solcher Signalhub auch als Signalhub infolge einer Erfassung einer Vertiefung und des Vorsprungs in dieser Vertiefung durch einen Sensor bezeichnet werden bzw. sein.

In einer Ausführung wird der Signalhub, der sich infolge der Abstandsänderung zwischen Vertiefungsgrund und Vorsprung und/oder zwischen Vorsprung und Vertiefungsgrund ergibt, d.h. ein Signalhub infolge einer Erfassung einer Vertiefung und des Vorsprungs in dieser Vertiefung, auf Basis einer vorhergehenden Kalibrierung einem Radialabstand der Laufschaufelanordnung zugeordnet: bei einem kapazitiven Sensor ändert sich die direkt oder indirekt erfasste Kapazität eines Kondensators infolge der Änderung der wirksamen Umfangsfläche des Vertiefungsgrunds bzw. Vorsprungs. Diese Änderung bzw. dieser Signalhub ist bei unterschiedlichen Radialabständen des Dichtungsflansches zum Sensor bzw. dem Gehäuse, an dem dieser angeordnet ist, unterschiedlich. Dementsprechend kann der Signalhub einem bestimmten Radialabstand zugeordnet werden, wobei in einer vorhergehenden Kalibrierung entsprechend bestimmten Radialabständen bestimmte Signalhübe zugeordnet wurden. Die Zuordnung eines erfassten Signalhubs zu einem Radialabstand auf Basis einer vorhergehenden Kalibrierung kann insbesondere durch, vorzugsweise lineare, Inter- bzw. Extrapolation zwischen Wertepaaren der Kalibrierung erfolgen.

In einer Ausführung weist die Sensoranordnung wenigstens zwei Sensoren auf, deren Erfassungsflächen mit einer Drehachse der Turbomaschinenstufe unterschiedliche, insbesondere gegensinnige, vorzugsweise wenigstens im Wesentlichen betragsgleiche Winkel einschließen. Die Winkel sind vorzugsweise betragsmäßig größer als 5°, insbesondere größer als 10°. Zusätzlich oder alternativ sind sie in einer Ausführung betragsmäßig kleiner als 75°, insbesondere kleiner als 25°. In einer Ausführung sind die Winkel, wenigstens im Wesentlichen, gleich ±15°, in einer anderen Ausführung, wenigstens im Wesentlichen, gleich ±60°.

Ein Sensor weist in Umfangsrichtung einen Erfassungsbereich auf. Die in axialer Richtung hintereinanderliegenden Erfassungsbereiche bilden zusammen eine Erfassungsfläche im Sinne der vorliegenden Erfindung. Ein Sensor weist insbesondere eine Erfassungsfläche auf, die mit der Drehachse einen Winkel einschließt, wenn der Sensor in axialer Richtung verschobene Vertiefungen bzw. Vorsprünge entsprechend früher bzw. später erfasst. Je größer der Betrag des Winkels ist, desto früher bzw. später erfasst der Sensor zwei in axialer Richtung verschobene bzw. miteinander fluchtende Vertiefungen bzw. Vorsprünge. Weist beispielsweise ein Sensor eine rechteckige, dem Dichtungsflansch zugewandte Sensoroberfläche auf, deren Hauptachse mit der Drehachse der Turbomaschinenstufe einen Winkel einschließt, so schließt entsprechend die Erfassungsfläche ebenfalls diesen Winkel mit der Drehachse ein.

Durch diese gegen die Drehachse der Turbomaschine geneigten Eifassungsflächen kann entsprechend in einer Ausführung eine Axialposition der Laufschaufelanordnung erfasst werden. Hierzu wird in einer Ausführung zunächst ein Signalhub der Sensoranordnung infolge einer Erfassung einer Vertiefung der Vertiefungsanordnung und/oder des Vorsprungs in dieser Vertiefung durch einen Sensor der Sensoranordnung erfasst. Durch Weiterdrehen des Rotors hin zum weiteren Sensor wird anschließend ein weiterer Signalhub der Sensoranordnung infolge einer Erfassung dieser Vertiefung und/oder des Vorsprungs in dieser Vertiefung durch einen weiteren Sensor der Sensoranordnung erfasst. Der Abstand dieser Signalhübe, insbesondere der zeitliche oder der Drehwinkel-Abstand, kann dann auf Basis einer vorhergehenden Kalibrierung einer Axialposition der Laufschaufelanordnung zugeordnet werden. Konvergieren die Erfassungsflächen zweier Sensoren in axialer Richtung, so verringert sich der Abstand der Signalhübe, je weiter der Dichtungsflansch in axialer Richtung verschoben ist. Umgekehrt vergrößert sich der Abstand bei in axialer Richtung divergierenden Erfassungsflächen bzw. einer Verschiebung entgegen der axialen Richtung.

Wie vorstehend ausgeführt, können dabei die Abstände von Signalhüben der beiden Sensoren infolge eines Übergangs von einer Umfangsfläche des Dichtungsflansches neben einer Vertiefung zu dieser Vertiefung, von einer Vertiefung zu einer Umfangsfläche des Dichtungsflansches neben dieser Vertiefung, von einem Vertiefungsgrund einer Vertiefung zu dem Vorsprung in dieser Vertiefung und/oder von einem Vorsprung einer Vertiefung zu einem Vertiefungsgrund dieser Vertiefung neben diesem Vorsprung erfasst werden.

Zusätzlich oder alternativ zu zwei Sensoren, deren Erfassungsflächen mit der Drehachse unterschiedliche Winkel einschließen, kann die Sensoranordnung in einer Ausführung wenigstens einen Sensor aufweisen, dessen Erfassungsfläche in axialer Richtung konvergiert oder divergiert. Auch hierdurch kann eine Axialposition der Laufschaufelanordnung erfasst werden: bei einem Sensor mit konvergenter Erfassungsfläche wird der Winkel, um den der Dichtungsflansch weitergedreht werden muss, bis eine Vertiefung bzw. ein Vorsprung maximal von dem Sensor erfasst wird bzw. überhaupt nicht mehr von dem Sensor erfasst wird, umso kleiner, je weiter der Dichtungsflansch in axialer bzw. Konvergenzrichtung verschoben ist. Umgekehrt vergrößert sich der Winkel, um den der Dichtungsflansch weitergedreht werden muss, bis eine Vertiefung bzw. ein Vorsprung maximal bzw. überhaupt nicht mehr erfasst wird, umso mehr, je weiter der Dichtungsflansch in Divergenzrichtung verschoben ist. Entsprechend verkleinert bzw. vergrößert sich eine Breite des entsprechenden Signalhubs bzw. einer Flanke eines Sensorsignals mit der Axialposition relativ zu dem Sensor mit konvergenter bzw. divergenter Erfassungsfläche. Unter einer Breite eines Signalhubs wird vorliegend insbesondere eine Zeit oder ein Verdrehwinkel verstanden, über die bzw. dem der Signalhub auftritt. Dies kann in einer Ausführung durch die Zeit bzw. den Winkel zwischen dem Unter- oder Überschreiten vorgegebener Schranken durch ein Sensorsignal, aber auch durch die Zeit bzw. den Winkel zwischen Sensorsignalen bzw. Sensorsignalfolgen mit derselben Steigung, insbesondere der Hälfte einer maximalen Steigung des Sensorsignals bzw. der Sensorsignalfolge, erfasst werden.

Entsprechend wird nach einer Ausführung der vorliegenden Erfindung wenigstens ein Signalhub infolge einer Erfassung einer Vertiefung der Vertiefungsanordnung durch einen Sensor erfassen, dessen Erfassungsfläche in axialer Richtung konvergiert oder divergiert, und eine Breite dieses Signalhubes auf Basis einer Kalibrierung zu einer Axialposition der Laufschaufelanordnung zugeordnet. Wie vorstehend ausgeführt, kann dabei die Breite eines Signalhubs infolge eines Übergangs von einer Umfangsfläche des Dichtungsflansches neben einer Vertiefung zu dieser Vertiefung, von einer Vertiefung zu einer Umfangsfläche des Dichtungsflansches neben dieser Vertiefung, von einem Vertiefungsgrund einer Vertiefung zu dem Vorsprung in dieser Vertiefung und/oder von einem Vorsprung einer Vertiefung zu einem Vertiefungsgrund dieser Vertiefung neben diesem Vorsprung erfasst werden.

Wie vorstehend erläutert, ergibt sich ebenso wie für das Signal zwischen Vertiefungsgrund und Vorsprung bzw. Vorsprung und Vertiefungsgrund auch bei Ein- bzw. Ausfahren einer Vertiefung in bzw. aus der Erfassungsfläche eines Sensors ein Signalhub. Dieser wird in einer Ausführung der vorliegenden Erfindung dazu genutzt, einen Abrieb des Dichtungsflansches zu erfassen: je größer der Abrieb, desto geringer ist der Signalhub. Entsprechend kann in einer Ausführung wenigstens ein Signalhub der Sensoranordnung infolge einer Erfassung einer Vertiefung der Vertiefungsanordnung und einer dieser Vertiefung benachbarten, insbesondere in Drehrichtung vor- oder nachgelagerten, Umfangsfläche des Dichtungsflansches durch einen Sensor der Sensoranordnung erfasst und dieser Signalhub auf Basis einer vorhergehenden Kalibrierung einem Abrieb des Dichtungsflansches zugeordnet werden.

Der Dichtungsspalt zwischen Dichtungsflansch und Gehäuse, insbesondere einem Einlaufbelag des Gehäuses, kann neben dem Radialabstand des Dichtungsflansches zu einem gehäusefesten Sensor und einem eventuellen Abrieb des Dichtungsflansches auch von einem Einrieb am Gehäuse und/oder der Axialposition des Dichtungsflansches abhängen. Entsprechend wird in einer Ausführung der vorliegenden Erfindung, insbesondere periodisch, ein Einrieb des dem Dichtungsflansch gegenüberliegenden Gehäuses, insbesondere eines dem Dichtungsflansch gegenüberliegenden Einlaufbelags des Gehäuses, erfasst. Dieser kann bei der Erfassung des Dichtungsspaltes berücksichtigt, insbesondere zu einem erfassten Radialabstand und/oder einem Abrieb des Dichtungsflansches hinzuaddiert werden.

Wie vorstehend erläutert, können die Signalhübe bzw. deren Abstände durch eine, vorzugsweise zweidimensionale, Kalibrierung Radialabständen bzw. Axialpositionen zugeordnet werden. Entsprechend wird in einer Ausführung der vorliegenden Erfinung, insbesondere zunächst, aus den Abständen zwischen Signalhüben, die durch Sensoren mit gegensinnig geneigten Erfassungsflächen nacheinander dieselbe Vertiefung erfassen, und/oder aus der Breite eines Signalhubs, der durch einen Sensor mit axial konvergierender bzw. divergierender Erfassungsfläche erfasst wird, eine Axialposition eines Dichtungsflansches bestimmt und, insbesondere anschließend, aus den Signalhüben zwischen Vertiefungsgrund und Vorsprung bzw. benachbarter, nicht vertiefter Umfangsfläche des Dichtungsflansches auf Basis der zweidimensionalen Kalibrierung der Radialabstand bzw. Abrieb des Dichtungsflansches. In einer Ausführung wird durch eine zweidimensionale Kalibrierung Paaren von Axialpositionen und Radialabständen bzw. Dichtspalten jeweils ein Abstand zwischen Signalhüben von Sensoren, deren Erfassungsflächen unterschiedliche Winkel einschließen, bzw. eine Breite eines Signalhubs eines Sensors mit axial konvergierender bzw. divergierender Erfassungsfläche, und zusätzlich ein Signalhub, insbesondere infolge einer Erfassung einer Vertiefung und deren Vorsprungs, zugeordnet. Somit kann bei Erfassung von Abstand bzw. Breite und Signalhub auf Basis der Kalibrierung die Axialposition und der Radialabstand bzw. Dichtspalt ermittelt werden. In einer Weiterbildung kann hieraus zusammen mit dem ebenfalls erfassten Einrieb ein aktueller Dichtspalt ermittelt werden.

In einer Ausführung der vorliegenden Erfindung ist eine Umfangsfläche des radialen Vorsprungs in der Vertiefung radial abgesenkt. Hierdurch verändert auch ein Abrieb der die Vertiefung umgebenden übrigen Umfangsfläche des Dichtungsflansches den Signalhub zwischen Vertiefungsgrund und Vorsprung nicht.

Eine Vertiefung kann komplett in einem Außendeckbandabschnitt angeordnet sein. Gleichermaßen kann eine Vertiefung, insbesondere der Vorsprung, durch zwei benachbarte Außendeckbandabschnitte gemeinsam ausgebildet sein bzw. die Vertiefung, insbesondere der Vorsprung, sich über die Kontaktfläche von zwei benachbarten Laufschaufeln erstrecken. Dabei kann die Vertiefung, insbesondere der Vorsprung symmetrisch auf beide benachbarten Außendeckbandabschnitte verteilt sein bzw. sich symmetrisch zur Kontaktfläche erstrecken.

In einer Ausführung ist der Dichtungsflansch eines oder zweier benachbarter Außendeckbandabschnitte gegenüber dem Dichtungsflansch der an ihn bzw. sie anschließenden weiteren Außendeckbandabschnitte radial abgesenkt, so dass sich die Vertiefung über ein bzw. beide kompletten Außendeckbandabschnitte erstreckt. Auf diese Weise kann besonderes einfach eine Vertiefung mit einem radialen Vorsprung dargestellt werden. Der radiale Vorsprung kann an den einander zugewandten Kontaktflächen dieser benachbarten Außendeckbandabschnitte angeordnet sein.

In einer Ausführung weist die Turbomaschinenstufe ein Verarbeitungsmittel auf, das zum Durchführen eines hier beschriebenen Verfahrens eingerichtet ist. Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere einen Dichtungsspalt und/oder eine Axialposition ermitteln kann.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1:: einen Teil einer Turbomaschinenstufe nach einer Ausführung der vorliegenden Erfindung in einer Ansicht in axialer Richtung;
- Fig. 2:: einen Teil der Turbomaschinenstufe der Fig. 1 längs der Schnittlinie II-II in Fig. 1;
- Fig. 3A:: ein Signal eines Sensors der Turbomaschinenstufe der Fig. 1 für eine Axialposition und einen Radialabstand einer Laufschaufelanordnung der Turbomaschinenstufe;
- Fig. 3B:: ein Signal des Sensors in Fig. 3A entsprechender Darstellung für eine andere Axialposition;
- Fig. 3C:: ein Signal des Sensors in Fig. 3A entsprechender Darstellung für einen anderen Radialabstand; und
- Fig. 4:: eine Draufsicht in radialer Richtung von außen auf einen Teil einer Abwicklung der Turbomaschinenstufe der Fig. 1;
- Fig. 5:: einen Teil einer Turbomaschinenstufe nach einer weiteren Ausführung der vorliegenden Erfindung in Fig. 4 entsprechender Darstellung; und
- Fig. 6:: ein Signal eines Sensors der Turbomaschinenstufe der Fig. 4 in Fig. 3A entsprechender Darstellung.

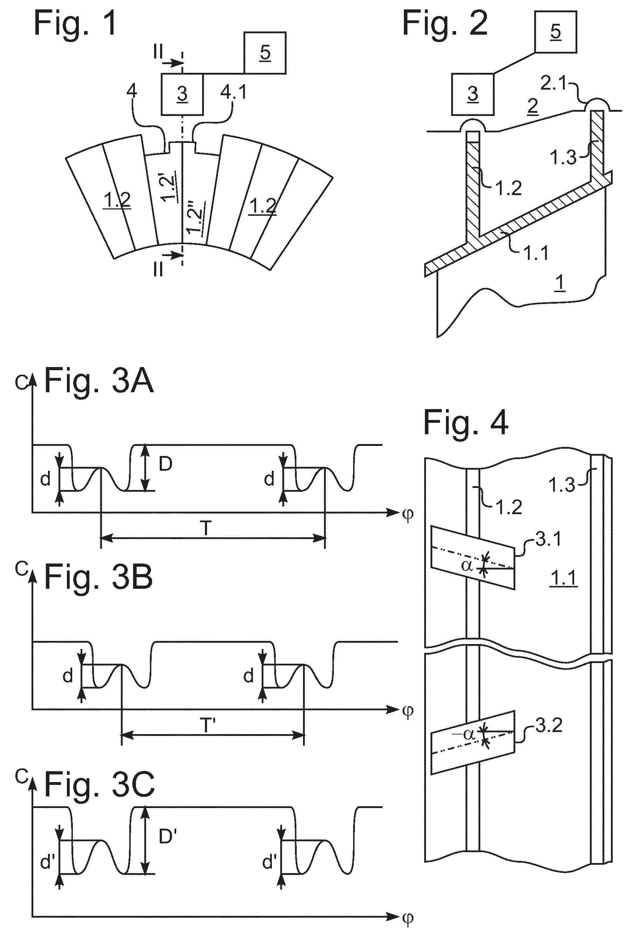

Fig. 1, 2, 4 zeigen in einer Ansicht in axialer Richtung (Fig. 1), einem Meridianschnitt (Fig. 2) bzw. einer abgewickelten Draufsicht in radialer Richtung einen Teil einer Turbomaschinenstufe nach einer Ausführung der vorliegenden Erfindung. Die Turbomaschinenstufe kann beispielsweise eine Turbinen- oder Verdichterstufe einer Gasturbine sein, vorzugsweise eines Flugtriebwerks.

Sie weist eine Laufschaufelanordnung mit mehreren in Umfangsrichtung benachbarten Laufschaufeln 1 auf. Die Laufschaufelanordnung ist in einem konischen Gehäuse 2 angeordnet.

Die Laufschaufelanordnung weist ein konisches Außendeckband 1.1 auf, das durch mehrere Außendeckbandabschnitte gebildet ist, mit denen jeweils eine oder mehrere Laufschaufeln verbunden sind.

Radial außen auf dem Außendeckband sind zwei in axialer bzw. Durchströmungsrichtung (horizontal von links nach rechts in Fig. 2, 4) voneinander beabstandete radiale Dichtungsflansche 1.2, 1.3 angeordnet, die sich stegartig radial nach außen (vgl. Fig. 1, 2) sowie in Umfangsrichtung (vgl. Fig. 1, 4) erstrecken.

Die vorliegende Erfindung wird nachfolgend mit Bezug auf den in Fig. 2, 4 linken Dichtungsflansch 1.2 näher erläutert, die Ausführungen können gleichermaßen auf den in Fig. 2, 4 rechten Dichtungsflansch 1.3 übertragen werden.

Der Dichtungsflansch 1.2 ist durch mehrere Dichtungsflanschabschnitte gebildet, die mit dem jeweiligen Außendeckbandabschnitt integral ausgebildet und von denen in Fig. 1 zur besseren Unterscheidung zwei mit 1.2 'bzw. 1.2" bezeichnet sind.

Der Dichtungsflanschen 1.2 weist eine Vertiefungsanordnung mit vier radialen Vertiefungen 4 auf, von denen in Fig. 1 eine dargestellt ist. Jede der gleichartigen Vertiefungen weist zwei gegenüberliegende Flanken (links, rechts in Fig. 1) auf, die sich im Wesentlichen in radialer Richtung erstrecken. Zwischen den Flanken erstreckt sich ein Vertiefungsgrund, der eine zylinderringförmige Umfangsfläche aufweist, so dass die Vertiefung 4 U-förmig ausgebildet ist.

In der Vertiefung 4 ist ein radialer Vorsprung 4.1 angeordnet, der sich von dem Vertiefungsgrund aus radial nach außen erstreckt und eine zylinderringförmige Umfangsfläche aufweist. Der radiale Vorsprung 4.1 ist in Umfangsrichtung gesehen mittig in der Vertiefung 4 angeordnet. Die Vertiefung 4 mit dem darin angeordneten Vorsprung 4.1 ist symmetrisch ausgebildet.

An dem Gehäuse 2 ist eine Sensoranordnung 3 mit sechs kapazitiven Sensoren zur Erfassung eines radialen Abstandes zu einer Umfangsfläche des Dichtungsflansches angeordnet von denen in Fig. 1, 2 einer und in Fig. 4 zwei Sensoren 3.1, 3.2 dargestellt sind.

Beim Überlaufen eines Sensors durch eine Vertiefung 4 ändert sich der radiale Abstand: zunächst vergrößert er sich, sobald der Sensor den Vertiefungsgrund erfasst.

Anschließend verringert sich der radiale Abstand, wenn der Sensor den Vorsprung erfasst. Anschließend vergrößert er sich wieder, sobald der Sensor den Vertiefungsgrund auf der in Umfangsrichtung gegenüberliegenden Seite des Vorsprungs erfasst. Schließlich verringert sich der radiale Abstand wieder auf den Ausgangswert, wenn der die Umfangsfläche des Dichtungsflansches neben der Vertiefung erfasst.

Somit ergibt sich beim Vorbeidrehen einer Vertiefung an einem Sensor ein allgemein W-artiger Signalverlauf mit vier abwechselnden, gegensinnigen Signalhüben. In Fig. 3A ist ein solcher Signalverlauf für die zwei benachbarten Sensoren 3.1, 3.2 beim Vorbeidrehen derselben Vertiefung 4 nacheinander an den Sensoren 3.1, 3.2 dargestellt. Dabei kann die Abszisse ϕ gleichermaßen einen Drehwinkel der Laufradanordnung oder die Zeit darstellen, da beide über die Drehgeschwindigkeit der Laufradanordnung ineinander überführbar sind.

Durch ein Verarbeitungsmittel 5 werden die Signalhübe der Sensoranordnung infolge einer Erfassung der Vertiefungen der Vertiefungsanordnung und deren Vorsprünge durch die Sensoren der Sensoranordnung erfasst.

Die Signalhübe d, die sich infolge der Abstandsänderung zwischen Vertiefungsgrund und Vorsprung und zwischen Vorsprung und Vertiefungsgrund ergeben, werden auf Basis einer vorhergehenden Kalibrierung einem Radialabstand der Laufschaufelanordnung zugeordnet. Fig. 3C zeigt den Signalverlauf der Fig. 3A für einen anderen Radialabstand zwischen Laufschaufelanordnung 1 und Sensoranordnung 3 bzw. Gehäuse 2: Man erkennt, dass sich die Signalhübe d' bei diesen unterschiedlichen Radialabständen unterscheiden. Dementsprechend kann der Signalhub d bzw. d' auf Basis einer vorhergehenden Kalibrierung jeweils einem bestimmten Radialabstand zugeordnet werden.

Die Sensoren der Sensoranordnung und ihre Erfassungsflächen bilden mit einer Drehachse der Turbomaschinenstufe gegensinnige, betragsgleiche Winkel ±a von ±15° (vgl. Fig. 4).

Durch diese gegen die Drehachse der Turbomaschine geneigten Erfassungsflächen kann eine Axialposition der Laufschaufelanordnung erfasst werden. Hierzu zeigt Fig. 3B den Signalverlauf der Fig. 3A für eine andere Axialposition der Laufschaufelanordnung 1: Es werden zunächst Signalhübe d der Sensoranordnung infolge einer Erfassung einer Vertiefung der Vertiefungsanordnung und des Vorsprungs in dieser Vertiefung durch einen Sensor 3.1 der Sensoranordnung erfasst (links in Fig. 3A, 3B).

Durch Weiterdrehen des Rotors hin zum weiteren Sensor 3.2 werden anschließend weitere Signalhübe (rechts in Fig. 3A, 3B) der Sensoranordnung infolge einer Erfassung dieser Vertiefung und des Vorsprungs in dieser Vertiefung durch den weiteren Sensor 3.2 der Sensoranordnung erfasst. Der zeitliche oder der Drehwinkel-Abstand dieser Signalhübe, in Fig. 3A, 3B durch den Abstand T bzw. T' der mittleren Spitzen angedeutet, kann dann im Verarbeitungsmittel 5 auf Basis einer vorhergehenden Kalibrierung einer Axialposition der Laufschaufelanordnung zugeordnet werden. Mit Blick auf Fig. 4 erkennt man, dass sich bei den von links nach rechts konvergierenden Erfassungsflächen der Sensoren 3.1, 3.2 der Abstand der Signalhübe verringert, je weiter der Dichtungsflansch von links nach rechts verschoben ist.

Ebenso, wie vorstehend für das Signal zwischen Vertiefungsgrund 4 und Vorsprung 4.1 bzw. Vorsprung 4.1 und Vertiefungsgrund 4 erläutert, ergibt sich auch bei Ein- bzw. Ausfahren einer Vertiefung in bzw. aus der Erfassungsfläche eines Sensors ein Signalhub D bzw. D' (vgl. Fig. 3A, 3C). Dieser wird im Verarbeitungsmittel 5 dazu genutzt, einen Abrieb des Dichtungsflansches 1.2 zu erfassen: je größer der Abrieb, desto geringer ist der Signalhub D bzw. D'. Entsprechend werden Signalhübe der Sensoranordnung infolge einer Erfassung einer Vertiefung der Vertiefungsanordnung und einer dieser Vertiefung benachbarten, insbesondere in Drehrichtung vor- oder nachgelagerten, Umfangsfläche des Dichtungsflansches durch einen Sensor der Sensoranordnung erfasst und diese Signalhübe auf Basis einer vorhergehenden Kalibrierung einem Abrieb des Dichtungsflansches zugeordnet.

Der Dichtungsspalt zwischen Dichtungsflansch und Gehäuse, insbesondere einem Einlaufbelag des Gehäuses, kann neben dem Radialabstand des Dichtungsflansches zu einem gehäusefesten Sensor und einem eventuellen Abrieb des Dichtungsflansches auch von einem Einrieb 2.1 am Gehäuse abhängen, wie er in Fig. 2 angedeutet ist. Entsprechend wird periodisch ein Einrieb des dem Dichtungsflansch gegenüberliegenden Gehäuses 2, insbesondere eines dem Dichtungsflansch gegenüberliegenden Einlaufbelags des Gehäuses, erfasst und durch das Verarbeitungsmittel 5 bei der Erfassung des Dichtungsspaltes berücksichtigt, insbesondere zu einem erfassten Radialabstand und einem Abrieb des Dichtungsflansches hinzuaddiert.

In Fig. 1 erkennt man, dass die Umfangsfläche des radialen Vorsprungs 4.1 in der Vertiefung 4 radial abgesenkt ist und dass sich die Vertiefung 4 und der Vorsprung 4.1 sich symmetrisch über die Kontaktfläche von zwei benachbarten Laufschaufeln erstrecken. Hierzu sind die Dichtungsflansche 1.2', 1.2" zweier benachbarter Außendeckbandabschnitte gegenüber dem Dichtungsflansch 1.2 der an sie anschließenden weiteren Außendeckbandabschnitte radial abgesenkt (vgl. Fig. 1), so dass sich die Vertiefung 4 über beide kompletten Außendeckbandabschnitte 1.2', 1.2" erstreckt. Der radiale Vorsprung 4.1 ist an den einander zugewandten Kontaktflächen dieser benachbarten Außendeckbandabschnitte 1.2', 1.2" angeordnet.

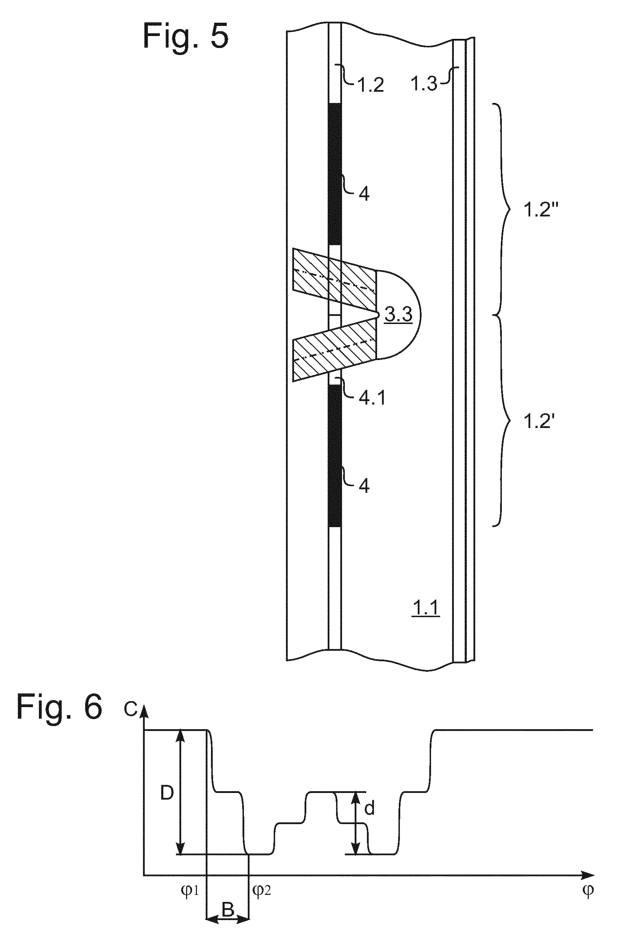

Fig. 5 zeigt in Fig. 4 entsprechender Darstellung eine Draufsicht in radialer Richtung von außen auf einen Teil einer Abwicklung einer Turbomaschinenstufe nach einer weiteren Ausführung der vorliegenden Erfindung. Übereinstimmende Elemente sind durch identische Bezugszeichen bezeichnet, so dass auf die übrige Beschreibung Bezug genommen und nachfolgend nur auf die Unterschiede zu der Ausführung gem. Fig. 1-4 eingegangen wird.

Die Sensoranordnung der Ausführung gem. Fig. 5 weist einen Sensor 3.3 zur Erfassung eines radialen Abstandes zu einer Umfangsfläche des Dichtungsflansches auf, dessen in Fig. 5 schraffierter Erfassungsfläche in axialer Richtung (von links nach rechts) konvergiert. Wie in Fig. 5 zu erkennen, ist die Erfassungsfläche dabei zweistrahlig ausgebildet, was beispielsweise durch einen V-förmigen kapazitiven Sensor dargestellt werden kann.

Beim Überlaufen dieses Sensors durch eine Vertiefung 4, deren Vertiefungsgrund in Fig. 5 zur Verdeutlichung dunkel eingefärbt ist, ändert sich der radiale Abstand: zunächst vergrößert er sich, sobald der Sensor den Vertiefungsgrund erfasst. Anschließend verringert sich der radiale Abstand, wenn der Sensor den Vorsprung 4.1 erfasst. Anschließend vergrößert er sich wieder, sobald der Sensor den Vertiefungsgrund auf der in Umfangsrichtung gegenüberliegenden Seite des Vorsprungs erfasst. Schließlich verringert sich der radiale Abstand wieder auf den Ausgangswert, wenn der Sensor die Umfangsfläche des Dichtungsflansches neben der Vertiefung erfasst.

Somit ergibt sich beim Vorbeidrehen einer Vertiefung an einem Sensor ein allgemein W-artiger Signalverlauf mit vier abwechselnden, gegensinnigen Signalhüben. In Fig. 6 ist in Fig. 3A entsprechender Darstellung ein solcher Signalverlauf dargestellt.

Aufgrund der zweistrahligen Erfassungsfläche weisen die Signalhübe dabei jeweils Absätze auf: wird die Vertiefung in die eine Erfassungsfläche gedreht, fällt das Signal flankenförmig ab. Erst, wenn die Vertiefung auch in die andere Erfassungsfläche gedreht wird, fällt das Signal flankenförmig weiter ab. Entsprechend steigt das Signal gestuft flankenartig an, sobald der Vorsprung in die Erfassungsflächen bzw. die Vertiefung aus den Erfassungsflächen gedreht wird.

Aufgrund der konvergierenden Erfassungsfläche ändert sich die Breite B der Signalhübe bzw. Flanken: Die Erfassungsfläche ist in der Fig. 5 links in Umfangsrichtung (vertikal in Fig. 5) breiter als rechts. Entsprechend bedarf es einer größeren Verdrehung des Dichtungsflanschs 1.2, bis seine Vertiefung bzw. deren Vorsprung von dem Sensor 3.3 maximal bzw. überhaupt nicht mehr erfasst wird. Damit vergrößert sich eine Breite B des Signalhubs D infolge der Erfassung der Vertiefung 4 durch den Sensor 3.3 beim Übergang zwischen der Umfangsfläche des Dichtungsflanschs 1.2 neben der Vertiefung 4 (unten in Fig. 5) und der Vertiefung. Diese Breite B kann auf Basis einer zweidimensionalen Kalibrierung einer Axialposition des Dichtungsflanschs 1.2 relativ zum Sensor 3.3 zugeordnet werden.

Die Breite B kann beispielsweise bestimmt werden zwischen einem Punkt ϕ₁, an dem das Sensorsignal C einen vorgegebenen Wert erstmals unterschreitet, und einem weiteren Punkt ϕ₂, an dem das Sensorsignal C einen vorgegebenen, kleineren Wert erstmals unterschreitet. Gleichermaßen kann die Breite B bestimmt werden zwischen zwei Punkten ϕ₁, ϕ₂, an denen das Sensorsignal C die gleiche Steigung dC/dϕ aufweist, beispielsweise die Hälfte einer maximalen Steigung. Auf diese Weise kann die Breite B unabhängig von einer absoluten Größe des Sensorsignals C ermittelt werden. Anstelle des Signalhubs D kann auch der Signalhub d infolge einer Erfassung der Vertiefung 4 und deren Vorsprung 4.1 verwendet werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Laufschaufel(anordnung)
- 1.1: Außendeckband(abschnitt)
- 1.2, 1.3: Dichtungsflansch
- 1.2', 1.2": Dichtungsflanschabschnitt
- 2: Gehäuse
- 2.1: Einrieb
- 3: Sensoranordnung
- 3.1, 3.2, 3.3: (Erfassungsfläche eines) Sensor(s)
- 4: Vertiefung
- 4.1: radialer Vorsprung
- 5: Verarbeitungsmittel

## Patentansprüche

1. Turbomaschinenstufe, insbesondere Turbinen- oder Verdichterstufe einer Gasturbine, mit einem, insbesondere konischen, Gehäuse (2), in dem eine Laufschaufelanordnung mit mehreren Laufschaufeln (1) angeordnet ist, die ein Außendeckband (1.1) mit wenigstens einem radialen Dichtungsflansch (1.2, 1.3) aufweisen, wobei der Dichtungsflansch eine Vertiefungsanordnung mit wenigstens einer radialen Vertiefung (4) aufweist, in der, insbesondere mittig, ein radialer Vorsprung (4.1) angeordnet ist, und wobei an dem Gehäuse eine Sensoranordnung (3) mit wenigstens einem kapazitiven Sensor (3.1, 3.2; 3.3) zur Erfassung eines radialen Abstandes zu einer Umfangsfläche des Dichtungsflansches angeordnet ist.

2. Turbomaschinenstufe nach dem vorhergehenden Anspruch, **dadurch gekennzeichnet, dass** die Sensoranordnung wenigstens zwei kapazitive Sensoren (3.1, 3.2) zur Erfassung eines radialen Abstandes zu einer Umfangsfläche des Dichtungsflansches aufweist, deren Erfassungsflächen mit einer Drehachse der Turbomaschinenstufe unterschiedliche, insbesondere gegensinnige, vorzugsweise wenigstens im Wesentlichen betragsgleiche Winkel (±α) einschließen.

3. Turbomaschinenstufe nach einem der vorhergehenden Ansprüche, **dadurch gekennzeichnet, dass** die Sensoranordnung wenigstens einen Sensor (3.3) zur Erfassung eines radialen Abstandes zu einer Umfangsfläche des Dichtungsflansches aufweist, dessen Erfassungsfläche in axialer Richtung konvergiert oder divergiert.

4. Turbomaschinenstufe nach einem der vorhergehenden Ansprüche, **dadurch gekennzeichnet, dass** eine Umfangsfläche des radialen Vorsprungs (4.1) in der Vertiefung (4) radial abgesenkt ist.

5. Turbomaschinenstufe nach einem der vorhergehenden Ansprüche, **dadurch gekennzeichnet, dass** die Vertiefung (4), insbesondere der Vorsprung (4.1), sich, insbesondere symmetrisch, über die Kontaktfläche von zwei benachbarten Laufschaufeln erstreckt.

6. Turbomaschinenstufe nach einem der vorhergehenden Ansprüche, **dadurch gekennzeichnet, dass** sich die Vertiefung über einen kompletten oder zwei benachbarte komplette Außendeckbandabschnitte erstreckt.

7. Turbomaschinenstufe nach einem der vorhergehenden Ansprüche, **gekennzeichnet durch** ein Verarbeitungsmittel (5), das zum Durchführen eines Verfahren nach einem der nachfolgenden Ansprüche eingerichtet ist.

8. Verfahren zum Ermitteln eines Dichtungsspalts zwischen dem Dichtungsflansch (1.2) der Laufschaufelanordnung und dem Gehäuse (2), insbesondere einem Einlaufbelag, und/oder einer Axialposition der Laufschaufelanordnung einer Turbomaschinenstufe nach einem der vorhergehenden Ansprüche, mit dem Schritt: Erfassen wenigstens eines Signalhubs (d, d', D) der Sensoranordnung infolge einer Erfassung einer Vertiefung (4) der Vertiefungsanordnung durch einen Sensor (3.1, 3.2, 3.3) der Sensoranordnung.

9. Verfahren nach dem vorhergehenden Anspruch, **gekennzeichnet durch** die Schritte:
Erfassen wenigstens eines Signalhubs (d, d') der Sensoranordnung infolge einer Erfassung einer Vertiefung (4) der Vertiefungsanordnung und des Vorsprungs (4.1) in dieser Vertiefung **durch** einen Sensor (3.1, 3.2, 3.3) der Sensoranordnung; und
Zuordnen dieses Signalhubs zu einem Radialabstand der Laufschaufelanordnung auf Basis einer Kalibrierung.

10. Verfahren nach einem der vorhergehenden Ansprüche, **gekennzeichnet durch** die Schritte:
Erfassen eines Signalhubs (d, d'; D) der Sensoranordnung infolge einer Erfassung einer Vertiefung der Vertiefungsanordnung und/oder des Vorsprungs in dieser Vertiefung **durch** einen Sensor (3.1) der Sensoranordnung;
Erfassen eines weiteren Signalhubs (d, d'; D') der Sensoranordnung infolge einer Erfassung dieser Vertiefung und/oder des Vorsprungs in dieser Vertiefung durch einen weiteren Sensor (3.2) der Sensoranordnung; und
Zuordnen eines Abstandes (T, T') dieser Signalhübe zu einer Axialposition der Laufschaufelanordnung auf Basis einer Kalibrierung.

11. Verfahren nach einem der vorhergehenden Ansprüche, **gekennzeichnet durch** die Schritte:
Erfassen eines Signalhubs (D) der Sensoranordnung infolge einer Erfassung einer Vertiefung der Vertiefungsanordnung und/oder des Vorsprungs in dieser Vertiefung **durch** einen Sensor (3.3) der Sensoranordnung, dessen Erfassungsfläche in axialer Richtung konvergiert oder divergiert; und
Zuordnen einer Breite (B) dieses Signalhubes zu einer Axialposition der Laufschaufelanordnung auf Basis einer Kalibrierung.

12. Verfahren nach einem der vorhergehenden Ansprüche, **gekennzeichnet durch** die Schritte:
Erfassen wenigstens eines Signalhubs (D, D') der Sensoranordnung infolge einer Erfassung einer Vertiefung (4) der Vertiefungsanordnung und einer dieser Vertiefung benachbarten Umfangsfläche des Dichtungsflansches **durch** einen Sensor (3.1, 3.2, 3.3) der Sensoranordnung; und
Zuordnen dieses Signalhubs zu einem Abrieb des Dichtungsflansches auf Basis einer Kalibrierung.

13. Verfahren nach einem der vorhergehenden Ansprüche, **gekennzeichnet durch** die Schritte:
Erfassen eines dem Dichtungsflansch gegenüberliegenden Einriebs (2.1) eines Einlaufbelags des Gehäuses (2).

## Claims

1. A turbo-engine stage, in particular a turbine or compressor stage of a gas turbine, having a housing (2), in particular a conical housing (2), arranged in which there is a rotor-blade arrangement with a plurality of rotor blades (1) that have an outer shroud band (1.1) with at least one radial sealing flange (1.2, 1.3), wherein the sealing flange has a recess arrangement with at least one radial recess (4), arranged in which, in particular centrally, there is a radial projection (4.1), and wherein arranged at the housing there is a sensor arrangement (3) with at least one capacitive sensor (3.1, 3.2; 3.3) for the detection of a radial distance to a peripheral surface of the sealing flange.

2. A turbo-engine stage according to the preceding claim, **characterised in that** the sensor arrangement has for the detection of a radial distance to a peripheral surface of the sealing flange at least two capacitive sensors (3.1, 3.2), the detection surfaces of which enclose, with a rotational axis of the turbo-engine stage, different, in particular opposing, angles that are preferably at least substantially equal in amount (±α).

3. A turbo-engine stage according to one of the preceding claims, **characterised in that** the sensor arrangement has for the detection of a radial distance to a peripheral surface of the sealing flange at least one sensor (3.3), the detection surface of which converges or diverges in the axial direction.

4. A turbo-engine stage according to one of the preceding claims, **characterised in that** a peripheral surface of the radial projection (4.1) is radially lowered in the recess (4).

5. A turbo-engine stage according to one of the preceding claims, **characterised in that** the recess (4), in particular the projection (4.1), extends, in particular asymmetrically, over the contact surface of two adjacent rotor blades.

6. A turbo-engine stage according to one of the preceding claims, **characterised in that** the recess extends over a complete or two adjacent complete outer shroud band sections.

7. A turbo-engine stage according to one of the preceding claims, **characterised by** a processing means (5) which is set up to carry out a method according to one of the following claims.

8. A method for determining a sealing gap between the sealing flange (1.2) of the rotor-blade arrangement and the housing (2), in particular a run-in coating, and/or an axial position of the rotor-blade arrangement of a turbo-engine stage according to one of the preceding claims, having the step: detection of at least one signal deviation (d, d', D) of the sensor arrangement in consequence of a detection of a recess (4) of the recess arrangement by a sensor (3.1, 3.2, 3.3) of the sensor arrangement.

9. A method according to the preceding claim, **characterised by** the steeps:
detection of at least one signal deviation (d, d') of the sensor arrangement in consequence of a detection of a recess (4) of the recess arrangement and of the projection (4.1) in this recess by a sensor (3.1, 3.2, 3.3) of the sensor arrangement; and
association of this signal deviation with a radial distance of the rotor-blade arrangement on the basis of a calibration.

10. A method according to one of the preceding claims, **characterised by** the steps:
detection of a signal deviation (d, d'; D) of the sensor arrangement in consequence of a detection of a recess of the recess arrangement and/or of the projection in this recess by a sensor (3.1) of the sensor arrangement;
detection of a further signal deviation (d, d'; D') of the sensor arrangement in consequence of a detection of this recess and/or of the projection in this recess by a further sensor (3.2) of the sensor arrangement; and
association of a distance (T, T') between these signal deviations with an axial position of the rotor-blade arrangement on the basis of a calibration.

11. A method according to one of the preceding claims, **characterised by** the steps:
detection of a signal deviation (D) of the sensor arrangement in consequence of a detection of a recess of the recess arrangement and/or of the projection in this recess by a sensor (3.3) of the sensor arrangement, the detection surface of which converges or diverges in the axial direction; and
association of a width (B) of this signal deviation with an axial position of the rotor-blade arrangement on the basis of a calibration.

12. A method according to one of the preceding claims, **characterised by** the steps:
detection of at least one signal deviation (D, D') of the sensor arrangement in consequence of a detection of a recess (4) of the recess arrangement and of a peripheral surface of the sealing flange adjacent to this recess by a sensor (3.1, 3.2, 3.3) of the sensor arrangement; and
association of this signal deviation with an abrasion of the sealing flange on the basis of a calibration.

13. A method according to one of the preceding claims, **characterised by** the steps:
detection of a rubbing-in (2.1) of a run-in coating of the housing (2) lying opposite the sealing flange.

## Revendications

1. Etage de turbomachine, en particulier étage de turbine ou de compresseur d'une turbine à gaz, avec un carter (2), en particulier conique, dans lequel est disposée une couronne d'aubes mobiles comportant plusieurs aubes mobiles (1) présentant un anneau de renforcement extérieur (1.1) avec au moins une bride d'étanchéité radiale (1.2, 1.3), ladite bride d'étanchéité présentant un arrangement d'évidement avec au moins un évidement radial (4), où est disposée, en particulier centralement, une saillie radiale (4.1), et un arrangement de détection (3) avec au moins un capteur capacitif (3.1, 3.2 ; 3.3) pour la détection d'un espacement radial à une surface périphérique de la bride d'étanchéité étant disposé sur le carter.

2. Etage de turbomachine selon la revendication précédente, **caractérisé en ce que** l'arrangement de détection comporte au moins deux capteurs capacitifs (3.1, 3.2) pour la détection d'un espacement radial à une surface périphérique de la bride d'étanchéité, dont les surfaces de détection forment avec un axe de votation de l'étage de turbomachine des angles (±α) différents, en particulier contraires, préférentiellement de valeurs au moins sensiblement équivalentes.

3. Etage de turbomachine selon l'une des revendications précédentes, **caractérisé en ce que** l'arrangement de détection comporte au moins un capteur (3.3) pour la détection d'un espacement radial à une surface périphérique de la bride d'étanchéité, dont la surface de détection est convergente ou divergente dans la direction axiale.

4. Etage de turbomachine selon l'une des revendications précédentes, **caractérisé en ce qu'**une surface périphérique de la saillie radiale (4.1) est abaissée dans l'évidement (4) radial.

5. Etage de turbomachine selon l'une des revendications précédentes, **caractérisé en ce que** l'évidement (4), en particulier la saillie (4.1), s'étend en particulier symétriquement sur la surface de contact de deux aubes mobiles adjacentes.

6. Etage de turbomachine selon l'une des revendications précédentes, **caractérisé en ce que** l'évidement s'étend sur un segment d'anneau de renforcement extérieur complet, ou sur deux segments d'anneau de renforcement extérieur complets adjacents.

7. Etage de turbomachine selon l'une des revendications précédentes, **caractérisé par** un moyen de traitement (5) prévu pour l'exécution d'un procédé selon l'une des revendications ci-après.

8. Procédé de détection d'un jeu d'étanchéité centre à bride d'étanchéité (1.2) de la couronne d'aubes mobiles et le carter (2), en particulier une garniture de rodage, et/ou une position axiale de la couronne d'aubes mobiles d'un étage de turbomachine selon l'une des revendications précédentes, comprenant l'étape suivante :
de détection d'au moins une déviation de signal (d, d', D) de l'arrangement de détection à la suite d'une détection d'un évidement (4) de l'arrangement d'évidement par un capteur (3.1, 3.2, 3.3) de l'arrangement de détection.

9. Procédé selon la revendication précédente, **caractérisé par** les étapes suivantes :
de détection d'au moins une déviation de signal (d, d') de l'arrangement de détection à la suite d'une détection d'un évidement (4) de l'arrangement d'évidemment et de la saillie (4.1) dans ledit évidement par un capteur (3.1, 3.2, 3.3) de l'arrangement de détention ; et
d'affectation de ladite déviation de signal à un espacement radial de la couronne d'aubes mobiles sur la base d'un étalonnage.

10. Procédé selon l'une des revendications précédentes, **caractérisé par** les étapes suivantes :
de détection d'une déviation de signal (d, d' ; D) de l'arrangement de détection à la suite d'une détection d'un évidement de arrangement d'évidement et/ou de la saillie dans ledit évidement par un capteur (3.1) de l'arrangement de détection ;
de détection d'une autre déviation de signal (d, d'; D) de l'arrangement de détection à la suite d'une détection dudit évidement et/ou de la saillie dans ledit évidement par un autre capteur (3.2) de l'arrangement de detection ; et
d'affectation d'un espacement (T, T') desdites déviations de signal à une position axiale de la couronne d'aubes mobiles sur la base d'un étalonnage.

11. Procédé selon l'une des revendications précédentes, **caractérisé par** les étapes suivantes :
de détection d'une déviation de signal (D) de l'arrangement de détection à la suite d'une détection d'un évidement de l'arrangement d'évidement et/ou de la saillie dans ledit évidement par un capteur (3.3) de l'arrangement de détection, dont la surface de détection est convergente ou divergente dans la direction axiale ; et
d'affectation d'une largeur (B) de ladite déviation de signal à une position axiale de la couronne d'aubes mobiles sur la base d'un étalonnage.

12. Procédé selon l'une des revendications précédentes, **caractérisé par** les étapes suivantes :
de détection d'au moins une déviation de signal (D, D') de l'arrangement de détection à la suite d'une détection d'un évidement (4) de l'arrangement d'évidement et d'une surface périphérique de la bride d'étanchéité adjacente audit évidement par un capteur (3.1, 3.2, 3.3) de l'arrangement de détection ; et
d'affectation de ladite déviation de signal à une usure de la bride d'étanchéité sur la base d'un étalonnage.

13. Procédé selon l'une des revendications précédentes, **caractérisé par** l'étape suivante :
de détection d'une friction (2.1) opposée à la bride d'étanchéité d'une garniture de rodage du carter (2).
